# EUROPEAN PATENT APPLICATION

(11) **EP 4 629 184 A1**
(43) Date of publication of application: **08.10.2025**
(21) Application number: 23910338.5
(22) Date of filing: 21.12.2023
(51) Int. Cl.: G06V 10/22, G06F 8/41

(54) **METHOD AND APPARATUS FOR COMPILING SORTING OPERATOR**

(30) Priority: 26.12.2022 CN 202211690609; 11.05.2023 CN 202310526712
(71) Applicant: Huawei Technologies Co., Ltd., Shenzhen, Guangdong 518129 (CN)
(72) Inventor: JIN, Ge, Shenzhen, Guangdong 518129 (CN); CHENG, Chen, Shenzhen, Guangdong 518129 (CN); WU, Lingfei, Shenzhen, Guangdong 518129 (CN); XU, Ziming, Shenzhen, Guangdong 518129 (CN); LU, Jianpeng, Shenzhen, Guangdong 518129 (CN); YIN, Kejie, Shenzhen, Guangdong 518129 (CN)
(74) Representative: Gill Jennings & Every LLP
(86) International application number: PCT/CN2023/140618
(87) International publication number: WO 2024/140412

(57) **Abstract**

This application discloses a method and an apparatus for compiling a sorting operator. The method includes: receiving a sorting parameter input by a user and a first primitive selected for invocation, where the sorting parameter and the first primitive are used to sort multi-dimensional data; generating a scheduling policy for the sorting operator based on the sorting parameter and the first primitive; and compiling a computation description and the scheduling policy for the sorting operator to obtain a sorting computation expression including the scheduling policy. According to this application, execution efficiency of the compiled sorting operator can be improved, and performance of the sorting operator can be improved.

## Description

This application claims priority to Chinese Patent Application No. 202211690609.7, filed with the China National Intellectual Property Administration on December 26, 2022 and entitled "METHOD AND APPARATUS FOR SCREENING DETECTION BOXES IN TARGET DETECTION", and to Chinese Patent Application No. 202310526712.6, filed with the China National Intellectual Property Administration on May 11, 2023 and entitled "METHOD AND APPARATUS FOR COMPILING SORTING OPERATOR", which are incorporated herein by reference in their entireties.

### TECHNICAL FIELD

This application relates to the field of information technologies, and in particular, to a method and an apparatus for compiling a sorting operator.

### BACKGROUND

With rapid development of artificial intelligence technologies, conventional graphics processing units (Graphics Processing Unit, GPU) and central processing units (Central Processing Unit, CPU) cannot meet increasing performance requirements. Manufacturers are trying to research their artificial intelligence (Artificial Intelligence, AI) chips to meet differentiated competition in the AI field and gain a leading position. In the industry, key operators are accelerated on specific hardware chips currently based mainly on AI compilation frameworks such as a tensor virtual machine (Tensor Virtual Machine, TVM) to build high-performance neural network models.

In a high-level language used by a developer, the foregoing two AI compilation frameworks describe operator logic based on a concept of separating computation description (for example, compute (Compute)) from a scheduling policy (for example, schedule optimization). Compute focuses on description of computing logic. Schedule provides an instruction and a capability of abstract syntax tree (Abstract Syntax Tree, AST) change, and uses a primitive capability provided by the framework to optimize Compute.

A sorting operator is a critical operator in an existing AI compilation framework, and is applicable to a variety of scenario requirements (for example, sorting multi-dimensional data corresponding to a detection box in a target detection scenario). However, in an existing method for compiling a sorting operator, after the sorting operator is compiled, execution efficiency of an obtained compilation result is low, and schedule optimization cannot be performed.

### SUMMARY

Embodiments of this application provide a method and an apparatus for compiling a sorting operator, to improve execution efficiency of a compiled sorting operator and performance of the sorting operator.

According to a first aspect, this application provides a method for compiling a sorting operator, applied to a compiler, where the method includes: receiving a sorting parameter input by a user and a first primitive selected for invocation, where the sorting parameter and the first primitive are used to sort multi-dimensional data; generating a scheduling policy for the sorting operator based on the sorting parameter and the first primitive; and compiling a computation description and the scheduling policy for the sorting operator to obtain a sorting computation expression including the scheduling policy.

The computation description of the sorting operator is a high-level language description of sorting the multi-dimensional data by invoking the first primitive and based on the input sorting parameter.

From a perspective of technical effect, in this application, computing logic of the sorting operator in the high-level language program is described by using an architecture in which a computation description (for example, Compute) and a scheduling policy (for example, schedule) are separated. In comparison with a case in which the sorting operator cannot be optimized in a conventional technology, in the compilation method in this application, a capability of optimizing a sorting process of multi-dimensional data may be provided based on this architecture, so as to improve execution efficiency of the compiled sorting operator, so that execution efficiency of a related algorithm in a scenario including a sorting operation (for example, detection box sorting included in a target detection scenario) is improved.

In a feasible implementation, the sorting parameter includes a sorting axis, a sorting manner, and an output data type, where the sorting axis is a dimension B of the multi-dimensional data, the sorting manner is an ascending order or a descending order, and the output data type includes a numeric value of data and/or an index of data.

From a perspective of technical effect, in this application, the sorting axis, the sorting manner, and the output data type may be selected based on a user requirement, so that the user requirement can be better met, and adaptability is high.

In a feasible implementation, the scheduling policy includes a second primitive and a third primitive, where the second primitive is used to split the sorting axis based on a splitting factor input by the user, to obtain an inner axis and an outer axis, and the third primitive is used to sort the multi-dimensional data based on a length of the inner axis and a length of the outer axis.

The second primitive is used to invoke a second function in the compiler to perform a corresponding step, and the third primitive is used to invoke a third function in the compiler to perform a corresponding step.

From a perspective of technical effect, in this application, the sorting axis may be selectively split based on a splitting factor entered by the user, to adapt to a hardware computing capability, thereby improving execution efficiency of a compiled sorting operator.

In a feasible implementation, the sorting axis obtained after the splitting corresponds to M data blocks, a data amount included in each of the M data blocks is equal to a length of the inner axis and the splitting factor, and a length of the outer axis is equal to M; and a process of sorting the multi-dimensional data by using the third primitive includes: sorting the M data blocks separately to obtain the sorted M data blocks, and performing merge sorting on the sorted M data blocks to obtain a sorting result of the multi-dimensional data, where M is a positive integer greater than or equal to 2.

From a perspective of technical effect, the scheduling policy of this application is: first performing sorting for M times to obtain the M data blocks, where a data amount of each sorting is the length of the inner axis, and then performing merge sorting on the M data blocks. Compared with a process in the conventional technology in which a compiler cannot perform schedule optimization, in this application, a multi-dimensional data sorting process with a relatively large data scale may be split into a plurality of sorting processes (that is, M sort times) with a smaller granularity (that is, a data amount of a single sorting is the length of the inner axis), and the plurality of sorting processes are executed in parallel to adapt to the hardware computing capability, thereby greatly improving the execution efficiency of the compiled sorting operator.

In a feasible implementation, an intermediate representation IR corresponding to the scheduling policy includes a first code block and a second code block; the first code block includes a first for loop statement, used to sort the M data blocks to obtain the sorted M data blocks; and the second code block includes a second loop statement, used to perform the merge sorting on the sorted M data blocks to obtain the sorting result of the multi-dimensional data.

From a perspective of technical effect, logic of the intermediate representation obtained after the sorting operator is compiled is consistent with logic in the high-level language program, that is, the M data blocks are first sorted, and then merge sort is performed. Therefore, execution efficiency of machine code obtained based on the intermediate representation IR can be significantly improved.

In a feasible implementation, a process of sorting the M data blocks corresponds to a first instruction mapping label, and a process of the merge sort corresponds to a second instruction mapping label.

From a perspective of technical effect, because the sorting axis is divided into an outer axis and an inner axis, M sorting processes corresponding to the M data blocks are mapped to a same instruction. Subsequently, when identifying, by using an instruction mapping label, that the plurality of instructions correspond to one mapping label, hardware executes the M sorting processes corresponding to the plurality of instructions in parallel, thereby improving instruction parallelism and improving efficiency of the sorting process.

In a feasible implementation, the multi-dimensional data is used to describe a plurality of detection boxes in an image, the plurality of detection boxes correspond to at least one object in the image, each column of data in the dimension B is used to describe a same attribute of each of the plurality of detection boxes in the image, and a sorting result of the multi-dimensional data is used to represent the plurality of sorted detection boxes.

According to a second aspect, this application provides a detection box screening method in target detection, where the method includes: obtaining multi-dimensional data, where the multi-dimensional data is used to describe a plurality of detection boxes in an image, and the plurality of detection boxes correspond to at least one object in the image; invoking a first function in a compiler by using a first application programming interface API, to perform sorting on data on a sorting axis of the multi-dimensional data, to obtain a sorting result of the multi-dimensional data, the sorting axis corresponds to a dimension B of the multi-dimensional data, and each column of data in the dimension B is used to describe a same attribute of each of the plurality of detection boxes; and screening out at least one detection box from the plurality of detection boxes based on the sorting result and an overlapping rate between the detection boxes.

From a perspective of technical effect, in this application, the first function for multi-dimensional data corresponding to a detection box is defined in the compiler. Compared with a case in which a schedule cannot be optimized by using a compilation method in the conventional technology, in this application, the compiler may subsequently optimize a sorting process of the multi-dimensional data based on the defined first function, so as to improve a speed of the sorting process of the multi-dimensional data (that is, sorting of the detection box), that is, a screening speed of the detection box and inference efficiency and training efficiency of a target detection model can be significantly improved.

In a feasible implementation, the method further includes: invoking a second function to split the sorting axis to obtain an outer axis and an inner axis; and invoking a third function in the compiler by using a second API, to optimize the sorting processing. The optimized sorting includes: sorting the multi-dimensional data based on a length of the inner axis and a length of the outer axis to obtain sorted M data blocks, where a data amount included in each data block in the M data blocks is equal to the length of the inner axis, and M is equal to the length of the outer axis; and performing merge sorting on the sorted M data blocks, where M is a positive integer greater than or equal to 2.

From a perspective of technical effect, in this application, a third function for the detection box sorting process is defined in the compiler, and the sorting process of the multi-dimensional data corresponding to the detection box is split into two parts: first performing sorting for M times to obtain the M data blocks, where a data amount of each sorting is the length of the inner axis, and then performing merge sorting on the M data blocks. Compared with a process in which a compiler cannot perform optimization in the conventional technology, in this application, a multi-dimensional data sorting process with a relatively large data scale may be split into a plurality of sorting processes (that is, M sort times) with a smaller granularity (that is, a data amount of a single sorting is the length of the inner axis), and the plurality of sorting processes are executed in parallel to adapt to a hardware computing capability, improve a sorting speed of a detection box, and reduce a screening speed of the detection box, thereby significantly improving an inference speed and a training speed of the target detection model.

In a feasible implementation, a sorting process of the sorted M data blocks corresponds to a same instruction mapping label.

From a perspective of technical effect, because the sorting axis is divided into an outer axis and an inner axis, M sorting processes corresponding to the M data blocks are mapped to a same instruction. Subsequently, when identifying, by using an instruction mapping label, that the plurality of instructions correspond to one mapping label, hardware executes the M sorting processes corresponding to the plurality of instructions, thereby improving instruction parallelism, improving efficiency of the sorting process in parallel, and improving the screening speed of the detection box.

In a feasible implementation, each piece of data in the multi-dimensional data corresponds to one index; and the method further includes: outputting the index that is obtained after the sorting and that corresponds to the sorting result.

From a perspective of technical effect, indexes corresponding to all pieces of data in the multi-dimensional data are also correspondingly sorted, so that the data index may be directly invoked in a subsequent operation or storage process, instead of directly using the original data, to improve program execution efficiency and improve an inference and training speed of the target detection model.

The attribute of the detection box includes coordinates and an area of the detection box, and a category classification probability of a corresponding object in the detection box in the image.

According to a third aspect, this application provides a detection box screening method in target detection, where the method includes: obtaining multi-dimensional data, where the multi-dimensional data is used to describe a plurality of detection boxes in an image, and the plurality of detection boxes correspond to at least one object in the image; and invoking a second function to split a sorting axis of the multi-dimensional data, to obtain an outer axis and an inner axis, where the sorting axis corresponds to a dimension B of the multi-dimensional data, and each column of data in the dimension B is used to describe a same attribute of each of the plurality of detection boxes; and invoking a third function in a compiler by using a second application programming interface API, to optimize sorting of the sorting axis. The optimized sorting includes: sorting the multi-dimensional data based on a length of the inner axis and a length of the outer axis to obtain sorted M data blocks, where a data amount included in each data block in the M data blocks is equal to the length of the inner axis, and M is equal to the length of the outer axis; and performing merge sorting on the sorted M data blocks, where M is a positive integer greater than or equal to 2.

In a feasible implementation, a sorting process of the sorted M data blocks corresponds to a same instruction mapping label.

In a feasible implementation, each piece of data in the multi-dimensional data corresponds to one index; and the method further includes: outputting the index that is obtained after the sorting and that corresponds to the sorting result.

The attribute of the detection box includes coordinates and an area of the detection box, and a category classification probability of a corresponding object in the detection box in the image.

According to a fourth aspect, this application provides a detection box screening apparatus, where the apparatus includes: an obtaining unit, configured to obtain multi-dimensional data, where the multi-dimensional data is used to describe a plurality of detection boxes in an image, and the plurality of detection boxes correspond to at least one object in the image; and a processing unit, configured to invoke a first function in a compiler by using a first application programming interface API to perform sorting on data on a sorting axis of the multi-dimensional data, to obtain a sorting result of the multi-dimensional data, where: the sorting axis corresponds to a dimension B of the multi-dimensional data, and each column of data in the dimension B is used to describe a same attribute of each of the plurality of detection boxes; and the processing unit is configured to screen out at least one detection box from the plurality of detection boxes based on the sorting result and an overlapping rate between the detection boxes.

In a feasible implementation, the processing unit is further configured to: invoke a second function to split the sorting axis to obtain an outer axis and an inner axis; and invoke a third function in the compiler by using a second API, to optimize the sorting. The optimized sorting includes: sorting the multi-dimensional data based on a length of the inner axis and a length of the outer axis to obtain sorted M data blocks, where a data amount included in each data block in the M data blocks is equal to the length of the inner axis, and M is equal to the length of the outer axis; and performing merge sorting on the M data blocks, where M is a positive integer greater than or equal to 2.

In a feasible implementation, a sorting process of the M data blocks corresponds to a same instruction mapping label.

In a feasible implementation, each piece of data in the multi-dimensional data corresponds to one index; and the apparatus further includes: an output unit, configured to output the index that is obtained after the sorting and that corresponds to the sorting result.

The attribute of the detection box includes coordinates and an area of the detection box, and a category classification probability of a corresponding object in the detection box in the image.

According to a fifth aspect, this application provides a detection box screening apparatus, where the apparatus includes: an obtaining unit, configured to obtain multi-dimensional data, where the multi-dimensional data is used to describe a plurality of detection boxes in an image, and the plurality of detection boxes correspond to at least one object in the image; and a processing unit, configured to invoke a second function to split a sorting axis of the multi-dimensional data, to obtain an outer axis and an inner axis, where the sorting axis corresponds to a dimension B of the multi-dimensional data, and each column of data in the dimension B is used to describe a same attribute of each of the plurality of detection boxes; and the processing unit is further configured to invoke a third function in a compiler by using a second application programming interface API, to optimize sorting of the sorting axis. The optimized sorting includes: sorting the multi-dimensional data based on a length of the inner axis and a length of the outer axis to obtain sorted M data blocks, where a data amount included in each data block in the M data blocks is equal to the length of the inner axis, and M is equal to the length of the outer axis; and performing merge sorting on the sorted M data blocks, where M is a positive integer greater than or equal to 2.

In a feasible implementation, a sorting process of the sorted M data blocks corresponds to a same instruction mapping label.

In a feasible implementation, each piece of data in the multi-dimensional data corresponds to one index; and the apparatus further includes: an output unit, configured to output the index that is obtained after the sorting and that corresponds to the sorting result.

The attribute of the detection box includes coordinates and an area of the detection box, and a category classification probability of a corresponding object in the detection box in the image.

According to a sixth aspect, this application provides a compilation apparatus, where the apparatus includes: a receiving unit, configured to receive a sorting parameter input by a user and a first primitive selected for invocation, where the sorting parameter and the first primitive are used to sort multi-dimensional data; a scheduling unit, configured to generate a scheduling policy for the sorting operator based on the sorting parameter and the first primitive; and a compilation unit, configured to compile a computation description and the scheduling policy for the sorting operator to obtain a sorting computation expression including the scheduling policy.

In a feasible implementation, the sorting parameter includes a sorting axis, a sorting manner, and an output data type, where the sorting axis is a dimension B of the multi-dimensional data, the sorting manner is an ascending order or a descending order, and the output data type includes a numeric value of data and/or an index of data.

In a feasible implementation, the scheduling policy includes a second primitive and a third primitive, where the second primitive is used to split the sorting axis based on a splitting factor input by the user, to obtain an inner axis and an outer axis, and the third primitive is used to sort the multi-dimensional data based on a length of the inner axis and a length of the outer axis.

In a feasible implementation, the sorting axis obtained after the splitting corresponds to M data blocks, a data amount included in each of the M data blocks is equal to a length of the inner axis and the splitting factor, and a length of the outer axis is equal to M; and a process of sorting the multi-dimensional data by using the third primitive includes: sorting the M data blocks separately to obtain the sorted M data blocks, and performing merge sorting on the sorted M data blocks to obtain a sorting result of the multi-dimensional data, where M is a positive integer greater than or equal to 2.

In a feasible implementation, an intermediate representation IR corresponding to the scheduling policy includes a first code block and a second code block; the first code block includes a first for loop statement, used to sort the M data blocks to obtain the sorted M data blocks; and the second code block includes a second loop statement, used to perform the merge sorting on the sorted M data blocks to obtain the sorting result of the multi-dimensional data.

In a feasible implementation, a process of sorting the M data blocks corresponds to a first instruction mapping label, and a process of the merge sort corresponds to a second instruction mapping label.

In a feasible implementation, the multi-dimensional data is used to describe a plurality of detection boxes in an image, the plurality of detection boxes correspond to at least one object in the image, each column of data in the dimension B is used to describe a same attribute of each of the plurality of detection boxes in the image, and a sorting result of the multi-dimensional data is used to represent the plurality of sorted detection boxes.

According to a seventh aspect, an embodiment of this application provides an electronic device. The electronic device includes at least one processor, a memory, and an interface circuit. The memory, the interface circuit, and the at least one processor are interconnected through a line. The at least one memory stores instructions. When the instructions are executed by the processor, the method according to any one of the first aspect to the third aspect is implemented.

According to an eighth aspect, an embodiment of this application provides a chip system. The chip system includes at least one processor, a memory, and an interface circuit. The memory, the interface circuit, and the at least one processor are interconnected through lines, and the at least one memory stores instructions. When the instructions are executed by the processor, the method according to any one of the first aspect to the third aspect is implemented.

According to a ninth aspect, an embodiment of this application provides a computer-readable storage medium. The computer-readable storage medium stores a computer program. When the computer program is executed, the method according to any one of the first aspect to the third aspect is implemented.

According to a tenth aspect, an embodiment of this application provides a computer program. The computer program includes instructions. When the computer program is executed, the method according to any one of the first aspect to the third aspect is implemented.

### BRIEF DESCRIPTION OF DRAWINGS

The following describes accompanying drawings used in embodiments of this application.
FIG. 1 is a syntax structure in which a computation description and a scheduling policy are separated in a high-level language according to an embodiment of this application;
FIG. 2 is a diagram of a system architecture according to an embodiment of this application;
FIG. 3 is a diagram of a compilation process of a sorting operator according to an embodiment of this application;
FIG. 4 is a schematic flowchart of a method for compiling a sorting operator according to an embodiment of this application;
FIG. 5 is a schematic flowchart of a detection box screening method in target detection according to an embodiment of this application;
FIG. 6 is a diagram of a structure of a detection box screening apparatus according to an embodiment of this application;
FIG. 7 is a diagram of a structure of another detection box screening apparatus according to an embodiment of this application;
FIG. 8 is a diagram of a hardware structure of a computer device according to an embodiment of this application; and
FIG. 9 is a diagram of a structure of a compilation apparatus according to an embodiment of this application.

### DESCRIPTION OF EMBODIMENTS

The following describes embodiments of this application with reference to the accompanying drawings in embodiments of this application. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

In the specification, claims, and accompanying drawings of this application, the terms "first", "second", "third", "fourth" and so on are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device. An "embodiment" mentioned in this specification means that a particular feature, structure, or characteristic described with reference to this embodiment may be included in at least one embodiment of this application. The phrase shown in various positions in the specification may not necessarily refer to a same embodiment, and is not an independent or optional embodiment exclusive from another embodiment. It is explicitly and implicitly understood by persons skilled in the art that embodiments described in the specification may be combined with another embodiment.

The following describes technical terms in this application.
(1) Compiler: An equivalent program that uses a source program (Source Program) in an assembly or high-level computer language as input and translates the source program into machine code in a target language (Target Language). The source code is generally in a high-level language (High-Level Language), such as Pascal, C, C++, Java, or Python, or an assembly language. A target is object code (Object Code) in a machine language, which is sometimes referred to as machine code (Machine Code).
(2) Application programming interface (Application Programming Interface, API): Code provided by a computer operating system (Operating System) or a program library for an application to invoke. When an operation provided by the API is inseparable, the API is referred to as a primitive. A main purpose is to allow an application developer to invoke a set of routine functions without considering underlying source code of the set of routine functions or understanding details of an internal working mechanism of the set of routine functions. The API is abstract. The API defines only one interface and is not related to a specific operation performed by an application during actual implementation.
(3) Sorting axis: A dimension specified for sorting in multi-dimensional data, which means a dimension B in a target detection scenario in this application.
(4) Compute (Compute): In a high-level language for a developer and a compiler, Compute is used to describe a mathematical operation between multi-dimensional arrays, such as matrix addition, subtraction, multiplication, and division.
(5) Schedule optimization: In the high-level language, schedule is used to describe a processing/optimization process of Compute. In the compiler, a schedule process in the high-level language is represented as a template intermediate representation (Intermediate Expression, IR) transformation, for example, AST syntax tree transformation.
(6) Tensor virtual machine (Tensor Virtual Machine, TVM): An open-source machine learning compiler framework for a CPU, a GPU, and a machine learning accelerator.
(7) Instruction mapping label: A label, which may be //pragma_emit_insn ="vector_sort", where pragma_emit_insn is a keyword of the instruction mapping label, that is, indicates that the label is an instruction mapping label; and vector_sort indicates a type, which is sorting herein. The instruction mapping label indicates that code below the label is mapped to an instruction. The instruction is subsequently processed, so that the instruction may be executed on hardware (for example, a CPU).
(8) Detection box: The detection box may also be referred to an anchor box (Anchor box) or a prior bounding box (prior bounding box). In a target detection algorithm, several prior bounding boxes of different scales are usually set for a same position or a same object in an image, to collect a corresponding area in the image. The "different scales" herein not only means a difference in size, but also means a difference in length-width ratio.
(9) Category classification probability: A probability that an object in a detection box belongs to different categories. For example, if category classification probabilities of an object in a detection box are (0.5, 0.3, 0.2), where a first dimension, a second dimension, and a third dimension respectively correspond to categories of cat, dog, and pig, the category classification probability indicates that probabilities that the object in the detection box belongs to a cat, a dog, and a pig are 0.5, 0.3, and 0.2, respectively.

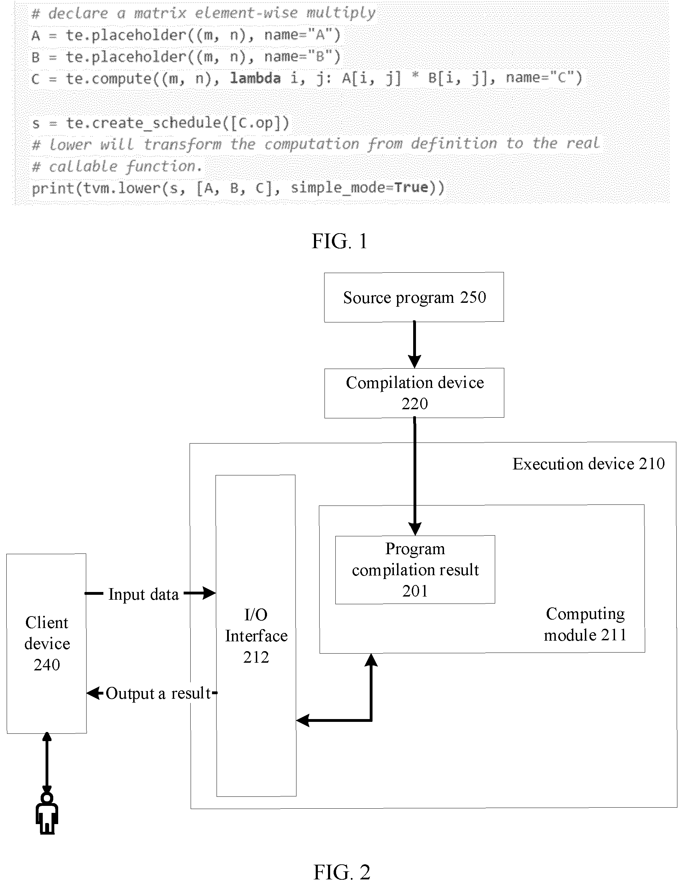

FIG. 1 is a syntax structure in which a computation description and a scheduling policy are separated in a high-level language according to an embodiment of this application.

As shown in FIG. 1, the first four lines of code represent a computation description in a high-level language for a developer, and the last four lines of code represent a scheduling policy in the high-level language.

A computation description is as follows: The first line of code is a comment, and the compute (Compute) of the second to fourth lines of code is matrix point multiplication. The second line of code defines a matrix that has a size of m*n and is named A. The third line of code defines a matrix that also has a size of m*n and is named B. The fourth line of code defines the following: An output matrix is C, with a size of m*n. The matrix C is obtained by performing matrix point multiplication on the matrix A and the matrix B.

The scheduling policy is as follows: The fifth line of code indicates creation of a schedule object and passing of the logic in the Compute of the obtained matrix C. The sixth and seventh lines of code describe a function of a lower function. The eighth line of code is used to output a result of the lower function. That is, the foregoing schedule process includes an execution process of the lower function.

Through the foregoing separation between the computation description and the scheduling policy in a syntax of the high-level language for the developer, the developer only needs to pay attention to expressions in the computation description and the scheduling policy independently. In a subsequent compilation process of the compiler, the compiler automatically combines logic in the computation description and the scheduling policy, to generate a corresponding hardware executable instruction.

This application is implemented based on the syntax structure in which the computation description is separated from the scheduling policy.

The following describes a system architecture and an application scenario in embodiments of this application.

FIG. 2 is a diagram of a system architecture according to an embodiment of this application.

As shown in FIG. 2, a source program 250 is a computation description of a sorting operator (that is, a high-level language program corresponding to the sorting operator). For example, the source program 250 may be a target detection program or a detection box screening program in the target detection program. The source program 250 invokes, through an API, a first function and a third function that are defined in a compiler on a compilation device 220 to perform detection box screening, so as to implement quick detection box screening, and improve inference efficiency and training efficiency of a target detection model.

The compilation device 220 compiles the source program 250 to obtain a program compilation result 201. The compilation device 220 may be any device on which an AI compiler (for example, an AI compiler such as a TVM) is deployed.

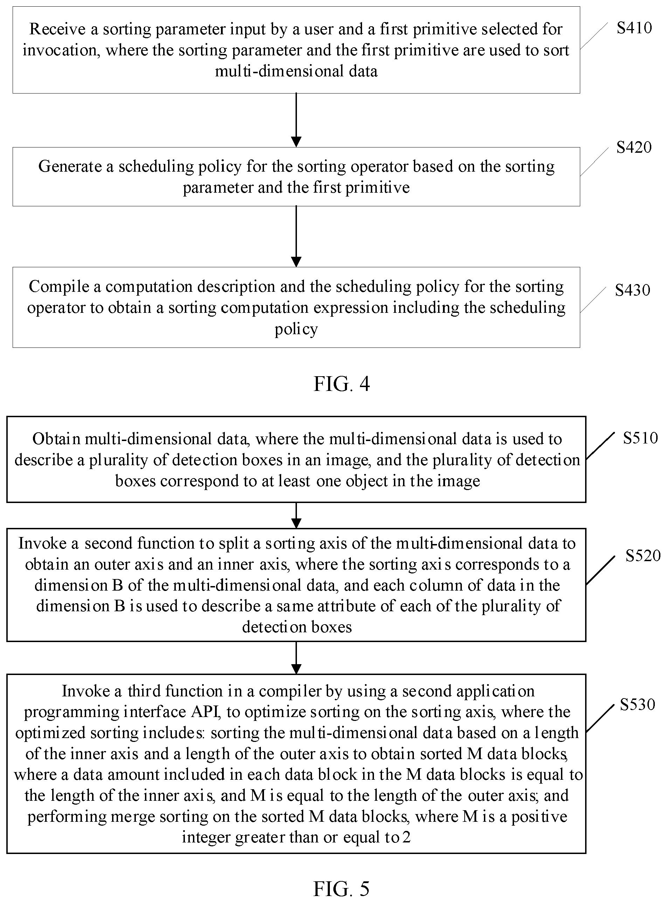

The following describes in detail, based on an embodiment shown in FIG. 4, a method for compiling a sorting operator according to an embodiment of this application, describes, based on embodiments shown in Table 1 to Table 7, an expression form of the sorting operator in a high-level language program and an expression form of the sorting operator in an IR generated in a compilation process, and describes technical effect brought by the method for compiling a sorting operator.

The program compilation result 201 obtained through compilation by the compilation device 220 may be applied to different systems or devices, for example, applied to an execution device 210 shown in FIG. 2. The execution device 210 may be a terminal, such as a mobile phone terminal, a tablet computer, a notebook computer, an augmented reality (augmented reality, AR)/virtual reality (virtual reality, VR) terminal, or a vehicle-mounted terminal, or may be a server, a cloud, or the like. In FIG. 2, the execution device 210 is provided with an input/output (input/output, I/O) interface 212, which is configured to exchange data with an external device.

The execution device 210 may receive multi-dimensional data (for example, multi-dimensional data used to describe a detection box in a target detection scenario) input by a database (not shown in FIG. 2) or a client device 240, and execute, by using a computation module 211, a corresponding instruction in the program compilation result 201, to obtain a corresponding sorting result (for example, a detection box sorting result). Then, the sorting result is further processed based on a specific scenario, to obtain a user result (for example, a type of an object in an image is obtained based on the detection box sorting result).

Finally, the I/O interface 212 returns the user result (for example, the type of the object in the image in target detection) to the client device 240 for providing to a user.

In the case shown in FIG. 2, the user may manually provide input data (for example, may be an image including a to-be-detected object specified by the user), and the manual providing may be performed by using an interface provided by the I/O interface 212. In another case, the client device 240 may automatically send the input data to the I/O interface 212. If it is required that the client device 240 needs to obtain a grant from the user for automatically sending the input data, the user may set corresponding permission in the client device 240. The user may view, on the client device 240, the user result output by the execution device 210. Specifically, the user result may be presented in a form of displaying, sound, action, or the like.

It should be noted that FIG. 2 is merely a diagram of a system architecture according to an embodiment of the present invention, and a position relationship between devices, components, modules, or the like shown in the figure does not constitute any limitation. For example, in FIG. 2, the compilation device 220 is an external device relative to the execution device 210, but in another case, the compilation device 220 may be alternatively disposed in the execution device 210. The execution device 210 is an external device relative to the client device 240, but in another case, the execution device 210 and the client device 240 may be a same device.

It should be noted that sorting of detection boxes in target detection is only a scenario to which the method for compiling a sorting operator in this application is applicable. The method for compiling a sorting operator in this application may be further applicable to any scenario (such as consumption and entertainment, smart transportation, and smart healthcare) in which sorting needs to be performed. The scenarios are not listed one by one in this application.

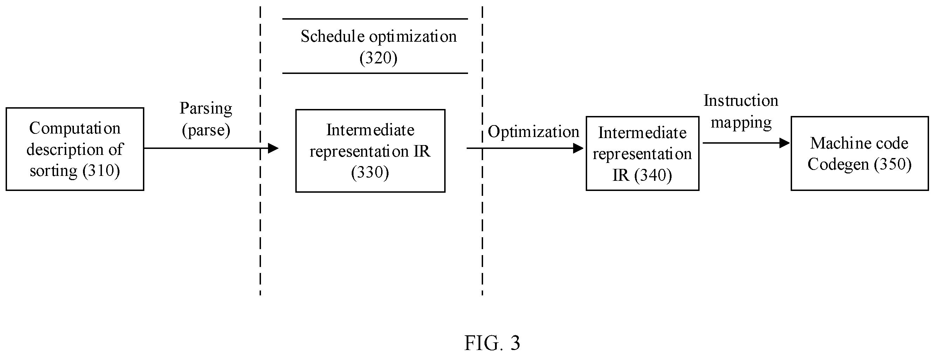

FIG. 3 is a diagram of a compilation process of a sorting operator according to an embodiment of this application. A computation description of the sorting operator is provided by using a high-level language program, for example, may be used to describe a detection box sorting process in a detection box screening method in a target detection scenario.

As shown in FIG. 3, after the computation description (that is, the source program in FIG. 2) of the sorting operator is input into the compiler, a front end of the compiler parses (parses) the computation description (310) of the sorting in the high-level language program. Because the first function defined in the compiler is invoked in the computation description of the high-level language program, the compiler automatically converts the sorting process into a corresponding syntax expression. Specifically, a lexical analyzer is responsible for finding "tokens" (Tokens) in the high-level language program, and a syntax analyzer assembles these scattered tokens into meaningful expressions and/or statements according to a predefined syntax.

Similarly, in a process of schedule optimization (320) on the compiler, because the third function defined in the compiler is invoked in the schedule expression of the high-level language program, the compiler may automatically convert the optimization expression including the third function into a syntax expression defined in the compiler, to obtain an intermediate representation IR (330) representing sorting logic and optimization logic.

Then, the intermediate representation IR (330) is further optimized to obtain an intermediate representation IR (340), and finally the intermediate representation IR (340) is mapped to machine code Codegen (350) that may be executed on hardware (such as a CPU and a GPU).

Subsequently, the machine code Codegen (350) corresponding to the foregoing sorting process is executed by using hardware, to obtain a corresponding sorting result, for example, the detection box sorting result.

FIG. 3 shows a process of optimizing a computation description to obtain a scheduling policy for a sorting operator. For some multi-dimensional data (a small data amount) that needs to be sorted, the scheduling policy for the sorting operator is directly generated based on the computation description (310) of the sorting without optimization, and then the sorting operator is compiled to obtain the intermediate representation IR (330).

Because the first function (that is, the sorting operator in this application) for the sorting process and the third function for the optimization process are defined in the compiler, the developer may directly invoke the functions in the compiler in the high-level language through APIs (that is, the first primitive and the third primitive in this embodiment of this application). In a subsequent compilation process, the compiler can automatically identify the first function and the third function, and convert the first function and the third function into corresponding intermediate representations IRs, so as to implement a corresponding sorting process and optimize the sorting process. However, an operator used for sorting in a compiler in the conventional technology cannot be optimized. Therefore, execution efficiency of a compilation result of the operator is relatively low. Compared with the conventional technology, in this application, the method for compiling a sorting operator designed based on an architecture in which the computation description is separated from the scheduling policy can significantly improve execution efficiency of a compilation result corresponding to the sorting operator, thereby improving algorithm execution efficiency in a scenario such as detection box screening.

It should be understood that the foregoing describes an implementation process of the method for compiling a sorting operator in this application by using only sorting of the detection box as an example, and does not constitute a limitation on a specific application scenario of the method provided in this application. The method for compiling a sorting operator in this application may be further applicable to various other specific scenarios in which sorting needs to be implemented.

According to the method for compiling a sorting operator provided in this application, the sorting process is separated from the optimization process in the compiler, to improve execution efficiency of machine code obtained after the compilation, that is, significantly improve efficiency of the sorting process. In addition, a user may further configure and define the sorting process and the optimization process by using the first primitive and the third primitive that are provided by the compiler, to adapt to different sorting scenarios, and significantly improve adaptability of the compilation method in this application.

FIG. 4 is a schematic flowchart of a method for compiling a sorting operator according to an embodiment of this application. As shown in FIG. 4, the method includes step S410, step S420, and step S430.

Step S410: Receive a sorting parameter input by a user and a first primitive selected for invocation, where the sorting parameter and the first primitive are used to sort multi-dimensional data.

The sorting parameter includes a sorting axis, a sorting manner, and an output data type, where the sorting axis is a dimension B of the multi-dimensional data, the sorting manner is an ascending order or a descending order, and the output data type includes a numeric value of data and/or an index of data.

The sorting axis is a dimension used for sorting the multi-dimensional data.

The following describes a correspondence between multi-dimensional data and a detection box in a target detection scenario by using a detection box sorting process in a target detection scenario as an example.

The multi-dimensional data is used to describe a plurality of detection boxes in an image, and the plurality of detection boxes correspond to at least one object in the image.

The multi-dimensional data includes a dimension A, and each column of data in the dimension A in the multi-dimensional data is used to describe an attribute of one detection box in the plurality of detection boxes.

The multi-dimensional data further includes a dimension B, and each column of data in the dimension B in the multi-dimensional data is used to describe a same attribute of each of the plurality of detection boxes.

Optionally, the attribute of the detection box includes coordinates and an area of the detection box, and a category classification probability of a corresponding object in the detection box in the image.

An object corresponding to the detection box in the image is an object in the detection box.

Optionally, each of the at least one object corresponds to at least one detection box in the plurality of detection boxes.

When the multi-dimensional data is two-dimensional data, the multi-dimensional data is used to describe a plurality of detection boxes included in one image; or when a quantity of dimensions of the multi-dimensional data is greater than or equal to 3, the multi-dimensional data is used to describe a plurality of detection boxes included in a plurality of images.

The following describes in detail a relationship between data in each dimension in multi-dimensional data in different dimensions and a detection box by using an example.
(1) If the multi-dimensional data is two-dimensional data (2, 9), a length of data in a first dimension is 2, and a length of data in a second dimension is 9. If the first dimension is the dimension A, and the second dimension is the dimension B, the dimension A includes nine columns of data, each column includes two pieces of data, and the two pieces of data in each column are used to describe an attribute of one detection box in a plurality of detection boxes. The dimension B includes two columns of data, each column includes nine pieces of data, and the nine pieces of data are used to separately describe a same attribute of each of a plurality of detection boxes. That is, in this case, one image corresponding to the two-dimensional data includes nine detection boxes.
(2) If the multi-dimensional data is three-dimensional data (2, 9, 10), lengths of data in the first dimension, the second dimension, and the third dimension are 2, 9, and 10, respectively. If the first dimension is the dimension A, and the second dimension is the dimension B, for a relationship between data in the dimension A and a detection box and a relationship between data in the dimension B and a detection box, refer to descriptions in the first example, that is, the dimension A and the dimension B are used to describe an attribute corresponding to a detection box included in each image. Optionally, the third dimension represents a quantity of images, that is, 10 images.

The first primitive is used to invoke a first function in the compiler to perform sorting on data on a sorting axis of the multi-dimensional data, so as to obtain a sorting result of the multi-dimensional data. The sorting axis corresponds to the dimension B of the multi-dimensional data, and each column of data in the dimension B is used to describe a same attribute of each of the plurality of detection boxes.

That the sorting axis corresponds to the dimension B means that the dimension B of the multi-dimensional data is used as the sorting axis for sorting.

Specifically, when a developer uses a high-level language to express a computation description of a sorting operator, input multi-dimensional data and a sorting axis that needs to be sorted in the multi-dimensional data are first defined. Then, the first function defined in the compiler is invoked by using the first primitive, to perform sorting on the sorting axis, so as to obtain a sorting result of the multi-dimensional data.

A computation description of a sorting operator is an expression of the sorting process in the high-level language program.

Optionally, each piece of data in the multi-dimensional data corresponds to one index; and the method further includes: outputting the index that is obtained after the sorting and that corresponds to the sorting result.

Specifically, each piece of data in the multi-dimensional data corresponds to one index, that is, indexes corresponding to all data in the multi-dimensional data also form a multi-dimensional array. The multi-dimensional array includes a first index, and the first index is any index in the multi-dimensional array. The first index corresponds to first data in the multi-dimensional data, and a position of the first index in the multi-dimensional array is the same as a position of the first data in the multi-dimensional data.

In this application, the multi-dimensional array is also correspondingly sorted based on the sorting result of the multi-dimensional data, so that the position of the first index in the multi-dimensional array after the sorting is the same as the position of the first data in the sorting result of the multi-dimensional data. The output sorted index is the sorted multi-dimensional array.

The sorting axis is the dimension B of the multi-dimensional data. For the dimension B, refer to the description in the foregoing embodiment.

It should be understood that internal logic, an implementation, or the like of the first function is not specifically limited in this application.

Step S420: Generate a scheduling policy for the sorting operator based on the sorting parameter and the first primitive.

The following describes, with reference to an example in Table 1, the computation description of the sorting process in the high-level language program in the method for compiling a sorting operator in this application (Compute is used as an example of the computation description of the sorting operator in this application). In Table 1, a Python language is used as an example for description.

The first line of code indicates that a piece of multi-dimensional data A is defined, the multi-dimensional data A is a piece of two-dimensional data, and there are n pieces of data in each dimension (or a length of each dimension is n).

The second line of code defines a sorting axis s (that is, the sorting axis in the foregoing embodiment) for sorting the multi-dimensional data A, and a length of the sorting axis is n.

The fourth line of code indicates that a sorting result is obtained after data on the sorting axis s is sorted in a single-output scenario.

te.sort is the invoked first primitive, and the sorting axis s is sorted by using a sort (sort) function (that is, the first function in this application) defined in the compiler by using the first primitive. i and j indicate two dimensions in the output sorting result B. (n, n) indicates an output sorting result B, which is still two-dimensional data; and there are n pieces of data in each dimension. axis indicates the sorting axis s. index indicates that the first j pieces of sorted data are output. In this example, j is equal to n. order indicates a sorting rule. For example, "ascend" indicates an ascending order, and "descend" indicates a descending order. output indicates whether an output is a value (Value) of data or an index (Index) of the data. In the single-output scenario, the output sorting result is the value (Value) of the multi-dimensional data.

The sixth line of code indicates a sorting expression in a dual-output scenario. Both the sorting result of the multi-dimensional data and the index that is obtained after the sorting and that corresponds to the sorting result are output. A difference between the sixth line of code and the fourth line of code lies in that, in a lambda function, the sort (sort) function is further invoked once through an API to sort the multi-dimensional array that includes an index corresponding to the multi-dimensional data.

A sorting computation expression obtained after the compilation is described in detail in the following embodiment corresponding to Example 1.

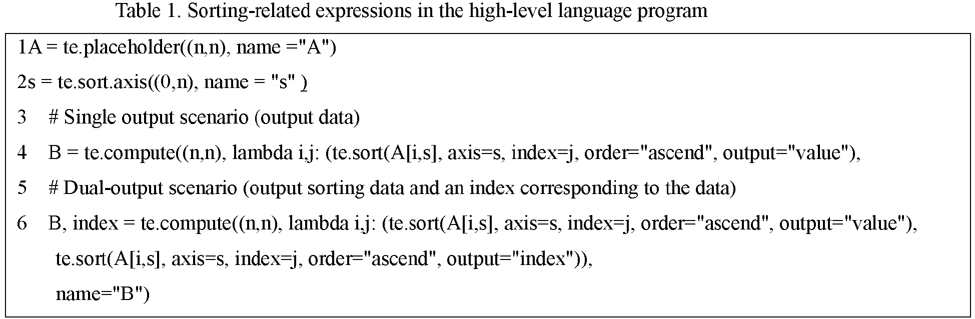

Based on support of the AI compiler for a feature of separating the computation description from the scheduling policy in the high-level language program, the scheduling policy for the sorting operator may be further generated in the high-level language program based on the foregoing sorting-related computation description.

There are two manners of generating the scheduling policy for the sorting operator:

### 1. Optimization is skipped.

Specifically, the scheduling policy for the sorting operator is directly generated by using a computation description (that is, the sorting parameter and the first primitive) of the sorting operator. That is, the scheduling policy is a default scheduling policy that does not optimize the sorting process. The default scheduling policy may be set by a developer.

In this case, the multi-dimensional data is sorted as a whole (that is, a single data block) to obtain a sorting result of the multi-dimensional data.

### 2. Optimization is performed.

The scheduling policy obtained in this manner optimizes the sorting process of the multi-dimensional data, and optimization logic may be described by a schedule optimization object.

Optionally, the scheduling policy includes a second primitive and a third primitive.

Specifically, when the scheduling policy is described by using the schedule, the scheduling policy is logically divided into two parts.

### (1) Splitting the sorting axis of the multi-dimensional data

Specifically, the second function is invoked by using the second primitive, to split the sorting axis, so as to obtain an outer axis and an inner axis. A splitting factor used to split the sorting axis is input by the user in the high-level language program.

Before the second function is invoked, a schedule optimization object is created in the high-level language program, and a function or a primitive in an optimization process is invoked under the schedule object.

The second function may be a split function in the Python language.

### (2) Optimization of the sorting

This process is expressed in the high-level language program as follows: The sorting process is optimized by invoking the third function in the compiler under the schedule object by using the third primitive, that is, the multi-dimensional data is sorted based on a length of the inner axis and a length of the outer axis.

Specifically, an optimization process of the third function is to split the sorting into two steps, so that the optimized sorting includes: (1) sorting multi-dimensional data based on the length of the inner axis and the length of the outer axis, to obtain sorted M data blocks, where a data amount included in each data block in the M data blocks is equal to the length of the inner axis, and M is equal to the length of the outer axis; and (2) performing merge sorting on the sorted M data blocks, where M is a positive integer greater than or equal to 2.

Specifically, data on the sorting axis is divided into M data blocks, and the M data blocks are separately sorted to obtain the sorted M data blocks, and then merge sort is performed on the sorted M data blocks. Specifically, the sorting process of the multi-dimensional data is split through an optimization process, to adapt to a computing capability of hardware. Compared with the conventional technology in which optimization cannot be performed, execution efficiency of a compiled sorting operator can be significantly improved, so that a detection box sorting process in a scenario such as a target detection scenario can be accelerated, and a sorting process and a speed of model reasoning and training in the scenario can be improved.

The following describes the foregoing optimization process by using two-dimensional data (64, 64) with a data length of 64 in each dimension as an example. A second dimension of the two-dimensional data is used as the sorting axis (that is, the dimension B), and the splitting factor is 16. First, the sorting axis is split based on the splitting factor, to obtain an outer axis with a length of 4 and an inner axis with a length of 16. Then, data on the sorting axis is sorted based on the length of the inner axis and the length of the outer axis. That is, 16 pieces of data on the sorting axis are sorted each time, and the sorting is performed four times, to obtain four sorted data blocks, where each data block includes 16 pieces of data. Next, merge sort is performed on the four sorted data blocks to obtain the sorted sorting axis. The 64 pieces of data on the sorted sorting axis are sorted in descending order or ascending order, or according to another rule. In addition, a merge sort manner is not limited in this application.

The sorting axis includes 64 columns of data. The foregoing is a sorting process of one column of data on the sorting axis. In the sorting process, after one column of data on the sorting axis is sorted, a sequence of other columns of data on the sorting axis are correspondingly adjusted, to obtain a sorting result of the two-dimensional data. That is, in the sorting result of the two-dimensional data, each column of data in the first dimension (that is, the dimension A) corresponds to a same detection box.

That is, the sorting axis includes at least one column of data, and each column of data is used to describe a same attribute of each of a plurality of detection boxes included in one image. The sorting process may be sorting one column of data corresponding to any attribute, and then correspondingly adjusting a sequence of other columns of data. This is not limited in this application.

Because the third function defined in the compiler is invoked in the foregoing optimization process, in a subsequent compilation process, the compiler may automatically combine sorting logic and optimization logic in the high-level language, represent the sorting logic and the optimization logic by using a program language defined in the compiler, and finally convert the sorting logic and optimization logic into hardware executable code. However, due to a limitation of hardware computing power, a multi-dimensional data sorting process is divided through the foregoing optimization process, so that a sorting process with a smaller inner axis length can be executed in parallel on hardware. In this manner, the sorting process can be greatly optimized to improve a speed of the sorting process, that is, a sorting process included in a scenario such as target detection is accelerated by fully using a hardware feature.

Based on the example of the high-level language program in Table 1, the following uses the example in Table 2 to show a scheduling policy (that is, an expression of an optimization process in the high-level language program) in the compilation method of the sorting operator in this application after optimization.

The first line of code indicates that the schedule object is created and the operation logic B.op for obtaining the sorting result B is passed to the schedule.

The second line of code indicates that a second function (split function) is invoked by using a second primitive (that is, sch[B].split) to split the sorting axis s, where axis indicates a sorting axis that is split, and factor indicates a splitting factor, that is, the sorting axis s is split in a unit of 16 to obtain an outer axis s.o and an inner axis s.i. The outer axis s.o represents a length of the outer axis obtained after the splitting, and the inner axis s.i represents a length of the inner axis obtained after the splitting.

The third line of code indicates that the third function sfactor in the compiler is invoked by using the third primitive (that is, sch.sfactor) to optimize the passed sorting. tensor=B indicates that the sorting result is assigned to the tensor, axis=s.o indicates the outer axis after the splitting, and add _dim=8 indicates a dimension added during sorting. A length of the dimension is 8. The added dimension can be configured based on a feature of a chip. B_R represents an intermediate representation formed by the sorted M data blocks in the sorting process performed by using the optimized sorting.

The computation expression corresponding to the scheduling policy is described in detail in the following embodiment corresponding to Example 2.

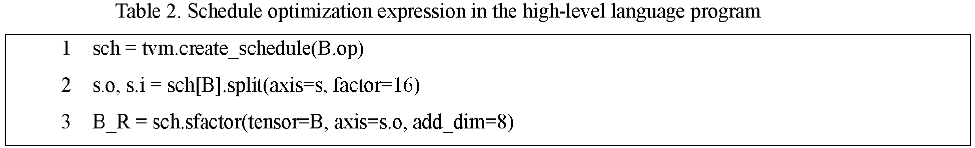

Optionally, after the sorting of the multi-dimensional data is optimized, an instruction mapping label may be further added to the optimized sorting.

Specifically, M sorting processes performed after the splitting correspond to a same instruction mapping label.

That is, the sorting processes of the M data blocks obtained by splitting the sorting axis correspond to a same instruction mapping label.

A process of adding an instruction mapping label may be expressed in the high-level language program by using an example shown in Table 3.

As shown in Table 3, the process of adding an instruction mapping label may be expressed by using one line of code. The example in Table 3 is described based on the examples in Table 1 and Table 2.

insn=vector_ sort indicates that a name of a mapped instruction is vector_sort. axis=sch[tensor].op.axis[1] indicates that data in the second dimension in the multi-dimensional data is mapped, that is, the sorting axis s for sorting in the foregoing example.

Because the sorting axis is split into an outer axis and an inner axis, M sorting processes of data on the sorting axis are mapped to hardware executable code. Subsequently, when identifying, by using an instruction mapping label, that the code corresponds to one sorting axis, the hardware executes sorting processes of a plurality of inner axes in parallel, thereby improving instruction parallelism, improving efficiency of the sorting process, and accelerating a screening process of a detection box.

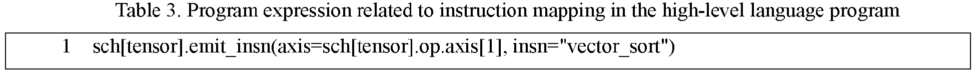

The following further describes application of a sorting result obtained by using a compilation method corresponding to a sorting operator in this application in a target detection scenario.

In the target detection scenario, after detection boxes are sorted by using the method for compiling a sorting operator in this application, at least one detection box may be screened out from a plurality of detection boxes based on a sorting result and an overlapping rate between the detection boxes.

The sorting result of the multi-dimensional data is a detection box sorting result obtained after sorting is performed based on an attribute of the detection box.

Because each object in the image corresponds to at least one detection box in the plurality of detection boxes, the process of screening out the at least one detection box from the plurality of detection boxes based on the sorting result and the overlapping rate between the detection boxes (that is, screening out the at least one detection box from the plurality of detection boxes corresponding to each object) specifically includes: A detection box with a highest ranking in the sorting result is used as the first detection box, and the first detection box corresponds to the first object in the image. Then, an overlapping rate between the remaining detection boxes and the first detection box is separately calculated, and a detection box with an overlapping rate higher than the first threshold (for example, 70%) and the first detection box are jointly used as detection boxes corresponding to the first object, to complete screening of the detection boxes corresponding to the first object. Then, the foregoing screening process is repeated by using a detection box that is not screened out as an object, and at least one detection box corresponding to each remaining object is selected.

The foregoing manner of screening out, based on the sorting result, the at least one detection box corresponding to each object is a manner of performing screening by using a non-maximum suppression (Non-Maximum Suppression, NMS) algorithm. Details are not described in this application. It should be understood that, persons skilled in the art may also screen out, from the sorting result in another manner, the at least one detection box corresponding to each object. This is not limited in this application.

Step S430: Compile a computation description and the scheduling policy for the sorting operator to obtain a sorting computation expression including the scheduling policy.

The sorting computation is expressed as an intermediate representation IR obtained after the compilation.

The following describes, by using two specific examples (Example 1 and Example 2), expressions of a sorting process corresponding to a sorting operator in the high-level language program and a corresponding IR.

### Example 1: Perform sorting + automatic instruction mapping by invoking a first function in a compiler by using a first primitive (optional)

In the computation description corresponding to the sorting operator in this embodiment, sorting is performed on the multi-dimensional data by invoking the first function in the compiler by using the first primitive, and an instruction mapping capability is provided for the sorting process. Table 4 is a program expression corresponding to the sorting process in Example 1 in the high-level language program, and Table 5 is an IR formed in a compilation process of the high-level language program in Table 4.

In Table 4, the first to the fifth lines of code is a computation description of the sorting operator, and the sixth to the tenth lines of code is a scheduling policy for the sorting operator.

As shown in Table 4, a plurality of detection boxes extracted from an image are represented by using two-dimensional data. In the two-dimensional data, a length of the first dimension is 2, and a length of the second dimension is 1000, which are represented by using the first and the second lines of code in Table 4.

The third line of code indicates that a value of the two-dimensional data is assigned to A.

The fourth line of code indicates a defined sorting axis s. In this example, the sorting axis s is data in the second dimension of the two-dimensional data.

The fifth line of code indicates that the first primitive (tvm.sort) provided by a TVM compiler is used to invoke the first function (that is, the sort function) defined in the compiler to perform sorting on the two-dimensional data A, so as to obtain a sorting result B. For other parameters in the fifth line of code, refer to the description in the foregoing embodiment. Details are not described herein again.

The sixth line of code indicates that a schedule optimization object is created. The scheduling policy generated in example 1 is not optimized.

The seventh to tenth lines of code indicate execution logic on the hardware. The seventh line of code indicates that the two-dimensional data A is read into A_ub (local buffer (Local Buffer) A), and the eighth line of code indicates that the sorting result is written into B_ub (local buffer (Local Buffer) B). The ninth line of code indicates that the process of reading data to A_ub is moved to the axis axis[0] for computation. The tenth line of code indicates that the process of writing sorted data to B_ub is moved to the axis axis[0] for computation.

The eleventh line of code indicates that the instruction mapping label "vectorsort" is added to the sorting axis op.axis[1].

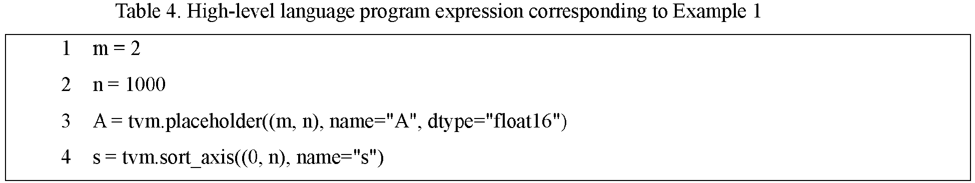

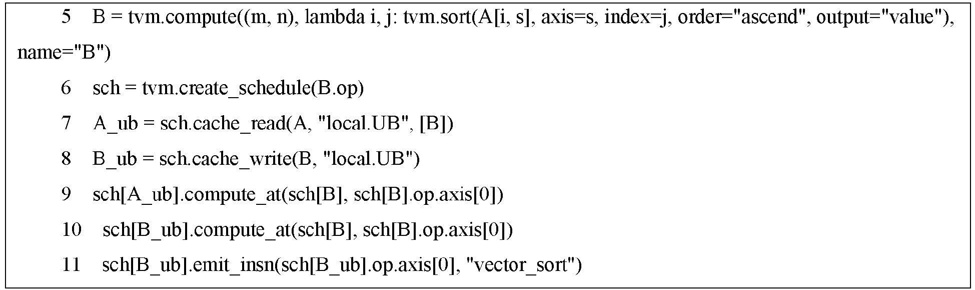

Because the first function invoked in the high-level language program expression in Table 4 is defined in the compiler, the TVM compiler automatically converts the first function into in corresponding template IR expression in a compilation process, that is, a sorting computation expression corresponding to the sorting operator (as shown in Table 5). As shown in Table 5, the sorting computation expression includes three parts of code blocks: a first part (lines 2 to 6), a second part (lines 7 to 14), and a third part (lines 15 to 17).

The second to the sixth lines of code are used to write the multi-dimensional data in a global memory into a local memory. The two-layer loop statement shown in Table 5 represents a process of writing the two-dimensional data into a local memory A_ub (which is represented as A.local.UB in Table 5), and 1000 pieces of data are written each time. i represents a length of the first dimension of the two-dimensional data, j represents a length of the second dimension of the two-dimensional data, and ax1 represents that a process of reading the two-dimensional data into A.local.UB is performed under the axis ax1.

The seventh to fourteenth lines of code are used to sort the multi-dimensional data, and represent a process of sorting the written data and writing a sorting result to B_ub (which is represented as B.local.UB in Table 5). The eighth line of code indicates that an instruction mapping label is added, that is, a label "vector sort" is added to an instruction corresponding to an operation process of the ninth to the fourteenth lines of code. In the ninth line of code, j.c indicates an axis used for data output. A length of j.c is 1000. It can be learned that data is written in the unit of 1000, and the data is sorted in the unit of 1000. In the tenth line of code, s is the sorting axis, and a length of the sorting axis is 1000. The eleventh line of code indicates a process of invoking the first function (that is, sort) in the compiler to sort the 1000 pieces of written data, and a sorting manner is an ascending order (ascend).

The fifteenth to the seventeenth lines of code are used to write the sorted multi-dimensional data from the local memory back to the global memory, which indicates a process of writing the 1000 pieces of data sorted in the local memory B_ub to the global memory (Global Memory, GM).

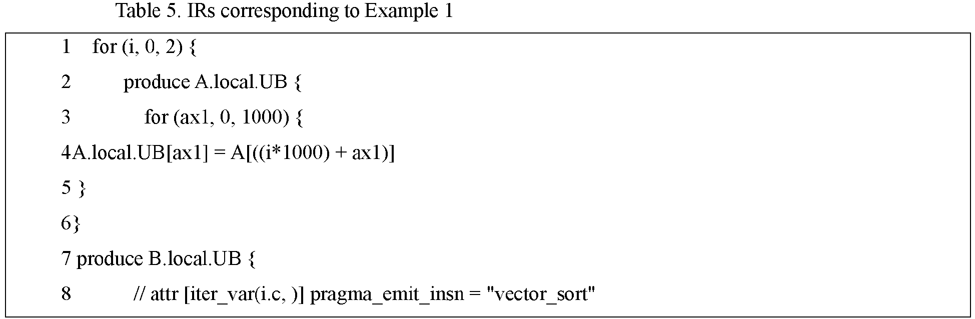

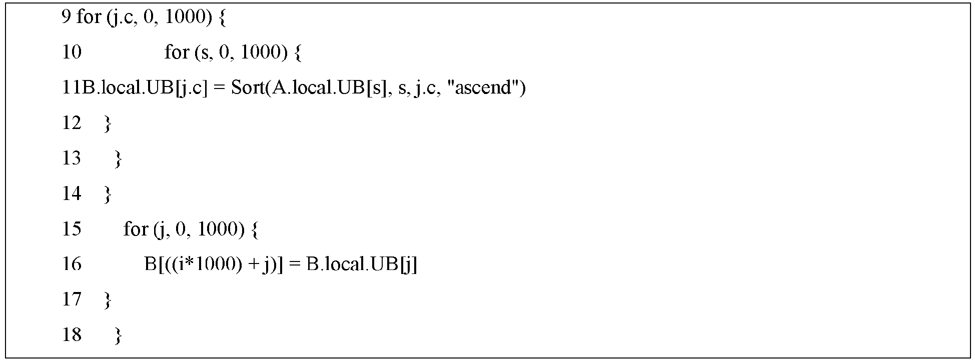

### Example 2: Use the first primitive to invoke the first function in the compiler to perform sorting + create a schedule object, and invoke the second primitive and the third primitive to perform optimization + automatic instruction mapping (optional)

In the computation description corresponding to the sorting operator in this embodiment, sorting is performed on the multi-dimensional data by invoking the first function in the compiler by using the first primitive; and in an optimization process, the sorting process is optimized by invoking the second function and the third function in the compiler by using the second primitive and the third primitive respectively, and finally an instruction mapping capability is provided for the sorting process. Table 6 is a program expression corresponding to the sorting process in Example 2 in the high-level language program, and Table 7 is an IR formed in a compilation process of the high-level language program in Table 6.

In Table 6, the first to the fifth lines of data is a computation description of the sorting operator, and the sixth to the tenth lines of data is a scheduling policy for the sorting operator.

As shown in Table 6, a plurality of detection boxes extracted from an image are represented by using two-dimensional data. In the two-dimensional data, a length of the first dimension is 1, and a length of the second dimension is 100,000, which are represented by using the first and the second lines of code in Table 6.

For logic of the third to the fifth lines of code, refer to the description in Example 1 (the sort function is the first function). Details are not described herein again.

The sixth to the eighth lines of code represent a schedule optimization operation (sfactor is the third function) performed based on sorting logic of the first to the fifth lines of code. For specific parameter meanings and logic, refer to description in the foregoing method embodiment. Details are not described herein again.

The ninth and the tenth lines of code indicate two instruction mapping labels. The ninth line of code indicates that a label "vector_sort" is added to an instruction corresponding to a process of calculating the intermediate representation B.sf (that is, the first instruction mapping label corresponding to the foregoing sorting process of the M data blocks), and the tenth line of code indicates that a label "vector merge_sort" is added to an instruction corresponding to an operation process of obtaining the sorting result B from B.sf (that is, the second instruction mapping label corresponding to the foregoing sorting process of the sorted M data blocks).

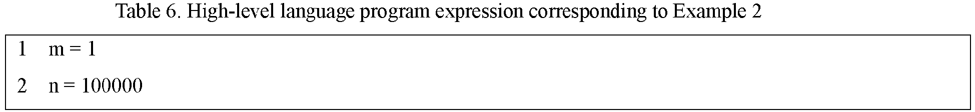

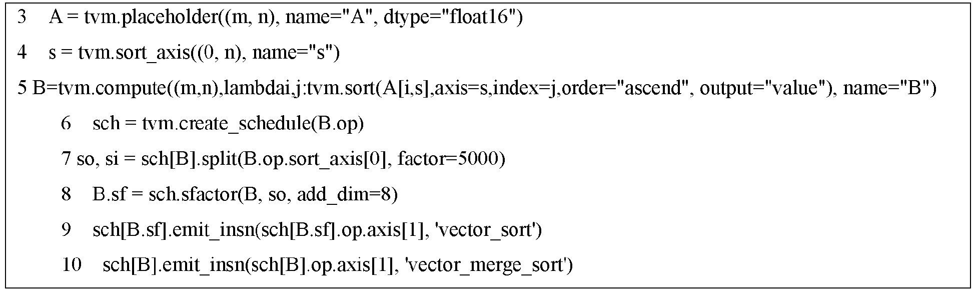

Because the first function, the second function, and the third function that are invoked in the high-level language program expression in Table 6 are defined in the compiler, the TVM compiler automatically converts the first function, the second function, and the third function into a corresponding template IR expression in a compilation process, that is, a sorting computation expression (IR shown in the second column in Table 7) of the sorting operator. The intermediate representation IR includes a first code block (the first to the twelfth lines of code) and a second code block (the thirteenth to the twenty-fourth lines of code).

The first to the twelfth lines of code are used to sort the M data blocks to obtain the sorted M data blocks, and represent a process of sorting data in the second dimension based on lengths of an outer axis and an inner axis that are obtained after the splitting. s.outer indicates the length of the outer axis, and the second line of code is an instruction mapping label. A label "vector_sort" is added to the instruction obtained by mapping the third to the eleventh lines of code. j indicates any data on the inner axis after sorting, and iv_proposal indicates an added sorting dimension with a length of 8. s.inner indicates the length of the inner axis. B.sf indicates an intermediate representation formed by the 20 data blocks after sorting. The sort mode is an ascending order "ascend". Sort is the first function defined in the compiler.

The thirteenth to the twenty-fourth lines of code are used to perform merge sorting on the sorted M data blocks to obtain a sorting result of the multi-dimensional data, and represent a process of the merge sort in the foregoing method embodiment. The thirteenth line of code indicates that the label "vector merge_sort" is added to the instruction obtained by mapping the fourteenth to the twenty-fourth lines of code. ax1 is the sorting axis in a process of the merge sort. S.outer.ms indicates the outer axis in the merge sort, and a length of the outer axis is 20. j.s indicates the inner axis in the merge sort, and a length of the inner axis is 5,000. B is the sorting result. iv_proposal.v indicates a sorting dimension added in the merge sort, and a length of the sorting dimension is 8. MergeSort is a first function for merging defined in the compiler.

As shown in Table 7, the first column is an IR obtained after the optimization process is removed from the example in Table 6. It can be learned that the 100,000 pieces of data are sorted directly by using the first function sort in the compiler by using the first primitive, to obtain the sorting result B. In this manner, because there is no optimization process, for sorting of large-scale data, a speed of a sorting process is greatly reduced due to a limitation of hardware computing power. Consequently, a speed of a detection box screening process is relatively low in a specific application scenario. After the optimization process is added, a sorting axis of a relatively large scale may be split based on a hardware computing capability, to obtain an outer axis and an inner axis, and then a plurality of sorting processes that need to be executed are executed in parallel, so that an execution speed of the sorting operator can be greatly improved, and a detection box screening speed in a target detection scenario, and a training speed and an inference speed of a target detection model are improved.

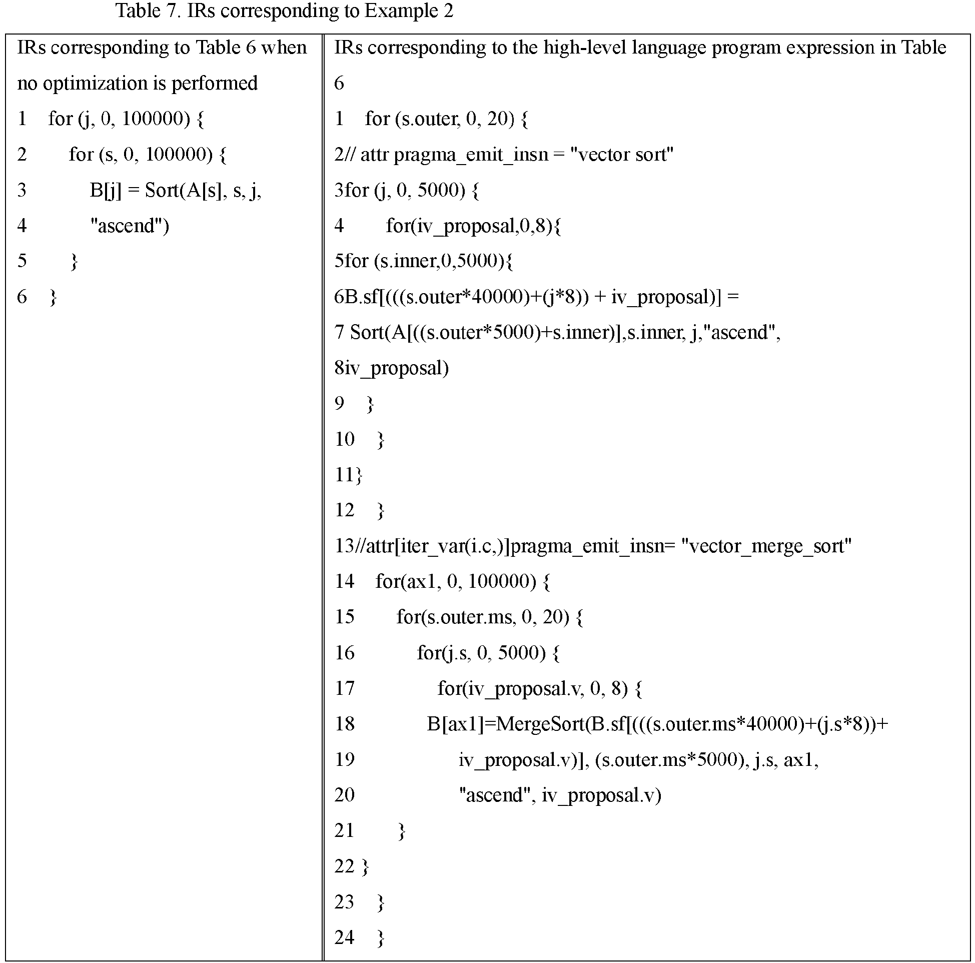

FIG. 5 is a schematic flowchart of a detection box screening method in target detection according to an embodiment of this application. As shown in FIG. 5, the method includes step S510, step S520, and step S530.

Step S510: Obtain multi-dimensional data, where the multi-dimensional data is used to describe a plurality of detection boxes in an image, and the plurality of detection boxes correspond to at least one object in the image.

Step S520: Invoke a second function to split a sorting axis of the multi-dimensional data to obtain an outer axis and an inner axis, where the sorting axis corresponds to a dimension B of the multi-dimensional data, and each column of data in the dimension B is used to describe a same attribute of each of the plurality of detection boxes.

Step S530: Invoke a third function in a compiler by using a second application programming interface API, to optimize sorting on the sorting axis. The optimized sorting includes: sorting the multi-dimensional data based on a length of the inner axis and a length of the outer axis to obtain sorted M data blocks, where a data amount included in each data block in the M data blocks is equal to the length of the inner axis, and M is equal to the length of the outer axis; and performing merge sorting on the sorted M data blocks, where M is a positive integer greater than or equal to 2.

In a feasible implementation, a sorting process of the sorted M data blocks corresponds to a same instruction mapping label.

In a feasible implementation, each piece of data in the multi-dimensional data corresponds to one index; and the method further includes: outputting the index that is obtained after the sorting and that corresponds to the sorting result.

The attribute of the detection box includes coordinates and an area of the detection box, and a category classification probability of a corresponding object in the detection box in the image.

The first function invoked in the sorting process of the sorting axis may be the Sort function in the embodiment in FIG. 4 or another sorting function defined in the AI compiler. This is not limited in this application.

Specifically, for an implementation process of another step in the method embodiment in FIG. 5, refer to related descriptions in the embodiment in FIG. 4. Details are not described herein again.

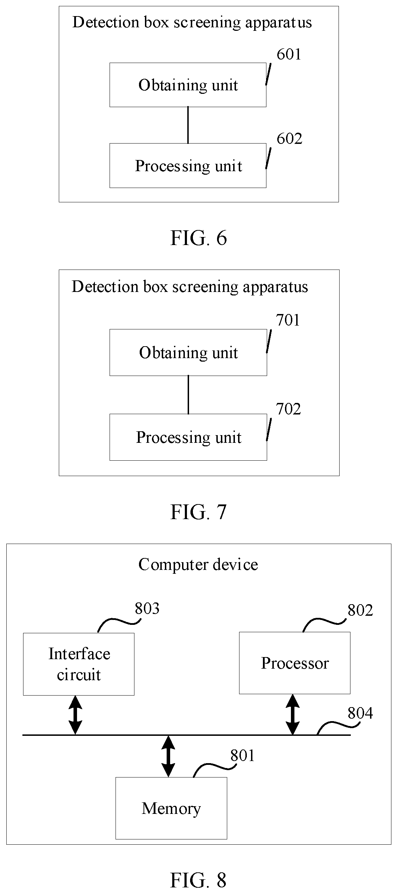

FIG. 6 is a diagram of a structure of a detection box screening apparatus according to an embodiment of this application. As shown in FIG. 6, the apparatus includes an obtaining unit 601 and a processing unit 602.

The obtaining unit 601 is configured to obtain multi-dimensional data, where the multi-dimensional data is used to describe a plurality of detection boxes in an image, and the plurality of detection boxes correspond to at least one object in the image. The processing unit 602 is configured to invoke a first function in a compiler by using a first application programming interface API to perform sorting on data on a sorting axis of the multi-dimensional data, to obtain a sorting result of the multi-dimensional data, where the sorting axis corresponds to a dimension B of the multi-dimensional data, and each column of data in the dimension B is used to describe a same attribute of each of the plurality of detection boxes. The processing unit 602 is further configured to screen out at least one detection box from the plurality of detection boxes based on the sorting result and an overlapping rate between the detection boxes.

Optionally, the processing unit 602 is further configured to: invoke a second function to split the sorting axis to obtain an outer axis and an inner axis; and invoke, by using a second API, a third function in the compiler to optimize the sorting. The optimized sorting includes: sorting the multi-dimensional data based on a length of the inner axis and a length of the outer axis to obtain sorted M data blocks, where a data amount included in each data block in the M data blocks is equal to the length of the inner axis, and M is equal to the length of the outer axis; and performing merge sorting on the sorted M data blocks, where M is a positive integer greater than or equal to 2.

Optionally, a sorting process of the sorted M data blocks corresponds to a same instruction mapping label.

Optionally, each piece of data in the multi-dimensional data corresponds to one index, and the apparatus further includes an outputting unit, configured to output the index that is obtained after the sorting and that corresponds to the sorting result.

The attribute of the detection box includes coordinates and an area of the detection box, and a category classification probability of a corresponding object in the detection box in the image.

Specifically, for a specific execution process of the detection box screening apparatus, refer to the execution process of the method embodiments described in FIG. 4 and Table 1 to Table 7 in the foregoing embodiments. Details are not described herein again.

FIG. 7 is a diagram of a structure of another detection box screening apparatus according to an embodiment of this application. As shown in FIG. 7, the apparatus includes an obtaining unit 701 and a processing unit 702.

The obtaining unit 701 is configured to obtain multi-dimensional data, where the multi-dimensional data is used to describe a plurality of detection boxes in an image, and the plurality of detection boxes correspond to at least one object in the image. The processing unit 702 is configured to invoke a second function to split a sorting axis of the multi-dimensional data to obtain an outer axis and an inner axis, where the sorting axis corresponds to a dimension B of the multi-dimensional data, and each column of data in the dimension B is used to describe a same attribute of each of the plurality of detection boxes. The processing unit 702 is further configured to invoke a third function in the compiler by using a second application programming interface API, to optimize sorting on the sorting axis. The optimized sorting includes: sorting the multi-dimensional data based on a length of the inner axis and a length of the outer axis to obtain sorted M data blocks, where a data amount included in each data block in the M data blocks is equal to the length of the inner axis, and M is equal to the length of the outer axis; and performing merge sorting on the sorted M data blocks, where M is a positive integer greater than or equal to 2.

Optionally, a sorting process of the sorted M data blocks corresponds to a same instruction mapping label.

Optionally, each piece of data in the multi-dimensional data corresponds to one index; and the apparatus further includes: an output unit, configured to output the index that is obtained after the sorting and that corresponds to the sorting result.

The attribute of the detection box includes coordinates and an area of the detection box, and a category classification probability of a corresponding object in the detection box in the image.

Specifically, for a specific execution process of the detection box screening apparatus, refer to the execution process of the method embodiments described in FIG. 4 and FIG. 5 and Table 1 to Table 7 in the foregoing embodiments. Details are not described herein again.

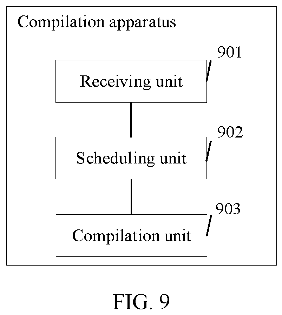

FIG. 9 is a diagram of a structure of a compilation apparatus according to an embodiment of this application. As shown in FIG. 9, the apparatus includes a receiving unit 901, a scheduling unit 902, and a compilation unit 903.

The receiving unit 901 is configured to receive a sorting parameter input by a user and a first primitive selected for invocation, where the sorting parameter and the first primitive are used to sort multi-dimensional data. The scheduling unit 902 is configured to generate a scheduling policy for the sorting operator based on the sorting parameter and the first primitive. The compilation unit 903 is configured to compile a computation description and the scheduling policy for the sorting operator to obtain a sorting computation expression including the scheduling policy.

The sorting parameter includes a sorting axis, a sorting manner, and an output data type, where the sorting axis is a dimension B of the multi-dimensional data, the sorting manner is an ascending order or a descending order, and the output data type includes a numeric value of data and/or an index of data.

Optionally, the scheduling policy includes a second primitive and a third primitive, where the second primitive is used to split the sorting axis based on a splitting factor input by the user, to obtain an inner axis and an outer axis, and the third primitive is used to sort the multi-dimensional data based on a length of the inner axis and a length of the outer axis.

Optionally, the sorting axis obtained after the splitting corresponds to M data blocks, a data amount included in each data block in the M data blocks is equal to a length of the inner axis and the splitting factor, and a length of the outer axis is equal to M. A process of sorting the multi-dimensional data by using the third primitive includes: sorting the M data blocks separately to obtain the sorted M data blocks, and performing merge sorting on the sorted M data blocks to obtain a sorting result of the multi-dimensional data, where M is a positive integer greater than or equal to 2.

Optionally, an intermediate representation IR corresponding to the scheduling policy includes a first code block and a second code block. The first code block includes a first for loop statement, used to sort the M data blocks to obtain the sorted M data blocks. The second code block includes a second for loop statement, used to perform the merge sorting on the sorted M data blocks to obtain a sorting result of the multi-dimensional data.

Optionally, a process of sorting the M data blocks corresponds to a first instruction mapping label, and a process of the merge sort corresponds to a second instruction mapping label.

Optionally, the multi-dimensional data is used to describe a plurality of detection boxes in an image, and the plurality of detection boxes correspond to at least one object in the image. Each column of data in the dimension B is used to describe a same attribute of each of the plurality of detection boxes. The sorting result of the multi-dimensional data is used to represent the plurality of sorted detection boxes.

Specifically, for a specific execution process of the compilation apparatus, refer to the execution process of the method embodiments described in FIG. 4 and FIG. 5 and Table 1 to Table 7 in the foregoing embodiments. Details are not described herein again.

FIG. 8 is a diagram of a hardware structure of a computer device according to an embodiment of this application, which is used as a possible implementation of the detection box screening apparatus in FIG. 6 or FIG. 7 or the compilation apparatus in FIG. 9. As shown in FIG. 8, the device may include a memory 801, one or more (only one is shown in the figure) processors 802, an interface circuit 803, and a bus 804. The memory 801, the processor 802, and the interface circuit 803 implement mutual communication connections through the bus 804.

The memory 801 is configured to store an instruction, where the instruction may be a hardware executable instruction that is in a high-level language program and that corresponds to the foregoing detection box screening method or the foregoing method for compiling a sorting operator, or a hardware executable instruction obtained after the high-level language program is compiled. The processor 802 is configured to invoke and run the instruction stored in the memory 801.

For a process in which the processor 802 performs the foregoing detection box screening method or the foregoing method for compiling a sorting operator, refer to detailed descriptions in the foregoing embodiment. Details are not described herein again.

It should be understood that the computer device may be the compilation device in FIG. 2.

The memory 801 may be a read-only memory (read-only memory, ROM), a static storage device, a dynamic storage device, or a random access memory (random access memory, RAM). The memory 801 may store a program. When the program or the instruction stored in the memory 801 is executed by the processor 802, the processor 802 and the interface circuit 803 are configured to perform steps of the method for compiling a sorting operator in FIG. 4 and/or FIG. 5 in the embodiments of this application or the detection box screening method in a specific scenario.

The processor 802 may be a general-purpose central processing unit (central processing unit, CPU), a microprocessor, an application-specific integrated circuit (application specific integrated circuit, ASIC), a graphics processing unit (graphics processing unit, GPU), or one or more integrated circuits, and is configured to execute a related program, to implement a function that needs to be performed by a unit in the detection box screening apparatus in the embodiments of this application, or perform the method for compiling a sorting operator in the method embodiments of this application or the detection box screening method in a specific scenario.

The processor 802 may be an integrated circuit chip and has a signal processing capability. In an implementation process, the steps of the detection box screening method in this application may be completed by using an instruction in a form of software in the processor 802. The processor 802 may be a general purpose processor, a digital signal processor (digital signal processing, DSP), an application-specific integrated circuit (ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like.

The interface circuit 803 uses a transceiver apparatus, for example, but not limited to a transceiver, to implement communication between the computer device and another device or a communication network. For example, a high-level language program corresponding to the compilation method of a sorting operator or the detection box screening method may be obtained by using the interface circuit 803.

The bus 804 may include a path for transferring information between various components (for example, the memory 801, the processor 802, and the interface circuit 803) of the computer device.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

An embodiment of this application provides a chip system. The chip system includes at least one processor, a memory, and an interface circuit. The memory, the interface circuit, and the at least one processor are interconnected through lines, and the at least one memory stores instructions. When the instructions are executed by the processor, some or all of the steps described in any one of the foregoing method embodiments/embodiment in FIG. 4 and/or FIG. 5 are implemented.

An embodiment of this application provides a computer storage medium. The computer storage medium stores a computer program. When the computer program is executed, some or all of the steps described in any one of the foregoing method embodiments in FIG. 4 and/or FIG. 5 are implemented.

An embodiment of this application provides a computer program. The computer program includes instructions. When the computer program is executed by a processor, some or all of the steps described in any one of the foregoing method embodiments in FIG. 4 and/or FIG. 5 are implemented.

In the foregoing embodiments, the description of each embodiment has respective focuses. For a part that is not described in detail in an embodiment, reference may be made to related descriptions in other embodiments. It should be noted that, for brief description, the foregoing method embodiments are represented as a series of action combinations. However, persons skilled in the art should understand that this application is not limited to the described action sequence, because some steps may be performed in other sequences or simultaneously according to this application. It should be further appreciated by persons skilled in the art that embodiments described in this specification all belong to example embodiments, and the related actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A method for compiling a sorting operator, applied to a compiler, wherein the method comprises:
receiving a sorting parameter input by a user and a first primitive selected for invocation, wherein the sorting parameter and the first primitive are used to sort multi-dimensional data;
generating a scheduling policy for the sorting operator based on the sorting parameter and the first primitive; and
compiling a computation description and the scheduling policy for the sorting operator to obtain a sorting computation expression comprising the scheduling policy.

2. The method according to claim 1, wherein
the sorting parameter comprises a sorting axis, a sorting manner, and an output data type, wherein the sorting axis is a dimension B of the multi-dimensional data, the sorting manner is an ascending order or a descending order, and the output data type comprises a numeric value of data and/or an index of data.

3. The method according to claim 1 or 2, wherein
the scheduling policy comprises a second primitive and a third primitive, wherein
the second primitive is used to split the sorting axis based on a splitting factor input by the user, to obtain an inner axis and an outer axis, and the third primitive is used to sort the multi-dimensional data based on a length of the inner axis and a length of the outer axis.

4. The method according to claim 3, wherein
the sorting axis obtained after the splitting corresponds to M data blocks, a data amount comprised in each data block in the M data blocks is equal to a length of the inner axis and the splitting factor, and a length of the outer axis is equal to M; and
a process of sorting the multi-dimensional data by using the third primitive comprises: sorting the M data blocks separately to obtain the sorted M data blocks, and performing merge sorting on the sorted M data blocks to obtain a sorting result of the multi-dimensional data, wherein M is a positive integer greater than or equal to 2.

5. The method according to claim 4, wherein
an intermediate representation IR corresponding to the scheduling policy comprises a first code block and a second code block;
the first code block comprises a first for loop statement, used to sort the M data blocks to obtain the sorted M data blocks; and
the second code block comprises a second for loop statement, used to perform the merge sorting on the sorted M data blocks to obtain a sorting result of the multi-dimensional data.

6. The method according to claim 4 or 5, wherein
a process of sorting the M data blocks corresponds to a first instruction mapping label; and
a process of the merge sort corresponds to a second instruction mapping label.

7. The method according to any one of claims 1 to 6, wherein
the multi-dimensional data is used to describe a plurality of detection boxes in an image, and the plurality of detection boxes correspond to at least one object in the image;
each column of data in the dimension B is used to describe a same attribute of each of the plurality of detection boxes; and
the sorting result of the multi-dimensional data is used to represent the plurality of sorted detection boxes.

8. An encoding apparatus, wherein the apparatus comprises:
a receiving unit, configured to receive a sorting parameter input by a user and a first primitive selected for invocation, wherein the sorting parameter and the first primitive are used to sort multi-dimensional data;
a scheduling unit, configured to generate a scheduling policy for the sorting operator based on the sorting parameter and the first primitive; and
a compilation unit, configured to compile a computation description and the scheduling policy for the sorting operator to obtain a sorting computation expression comprising the scheduling policy.

9. The apparatus according to claim 8, wherein
the sorting parameter comprises a sorting axis, a sorting manner, and an output data type, wherein
the sorting axis is a dimension B of the multi-dimensional data, the sorting manner is an ascending order or a descending order, and the output data type comprises a numeric value of data and/or an index of data.

10. The apparatus according to claim 8 or 9, wherein
the scheduling policy comprises a second primitive and a third primitive, wherein
the second primitive is used to split the sorting axis based on a splitting factor input by the user, to obtain an inner axis and an outer axis, and the third primitive is used to sort the multi-dimensional data based on a length of the inner axis and a length of the outer axis.

11. The apparatus according to claim 10, wherein
the sorting axis obtained after the splitting corresponds to M data blocks, a data amount comprised in each data block in the M data blocks is equal to a length of the inner axis and the splitting factor, and a length of the outer axis is equal to M; and
a process of sorting the multi-dimensional data by using the third primitive comprises: sorting the M data blocks separately to obtain the sorted M data blocks, and performing merge sorting on the sorted M data blocks to obtain a sorting result of the multi-dimensional data, wherein M is a positive integer greater than or equal to 2.

12. The apparatus according to claim 11, wherein
an intermediate representation IR corresponding to the scheduling policy comprises a first code block and a second code block;
the first code block comprises a first for loop statement, used to sort the M data blocks to obtain the sorted M data blocks; and
the second code block comprises a second for loop statement, used to perform the merge sorting on the sorted M data blocks to obtain a sorting result of the multi-dimensional data.

13. The apparatus according to claim 11 or 12, wherein
a process of sorting the M data blocks corresponds to a first instruction mapping label, and
a process of the merge sort corresponds to a second instruction mapping label.

14. The apparatus according to any one of claims 8 to 12, wherein
the multi-dimensional data is used to describe a plurality of detection boxes in an image, and the plurality of detection boxes correspond to at least one object in the image;
each column of data in the dimension B is used to describe a same attribute of each of the plurality of detection boxes; and
the sorting result of the multi-dimensional data is used to represent the plurality of sorted detection boxes.

15. A chip system, wherein the chip system comprises at least one processor, a memory, and an interface circuit, wherein the memory, the interface circuit, and the at least one processor are interconnected through a line, the at least one memory stores instructions, and when the instructions are executed by the processor, the method according to any one of claims 1 to 7 is implemented.

16. A computer device, wherein the computer device comprises at least one processor, a memory, and an interface circuit, wherein the memory, the interface circuit, and the at least one processor are interconnected through a line, the at least one memory stores instructions, and when the instructions are executed by the processor, the method according to any one of claims 1 to 7 is implemented.

17. A computer-readable storage medium, wherein the computer-readable storage medium stores a computer program, and when the computer program is executed, the method according to any one of claims 1 to 7 is implemented.

18. A computer program, wherein the computer program comprises instructions, and when the computer program is executed, the method according to any one of claims 1 to 7 is implemented.
